# EUROPÄISCHE PATENTSCHRIFT

(11) **EP 3 739 211 B1**
(45) Veröffentlichungstag und Bekanntmachung des Hinweises auf die Patenterteilung: **31.03.2021**
(21) Anmeldenummer: 19173995.2
(22) Anmeldetag: 13.05.2019
(51) Int. Cl.: F04B 37/20, F04B 39/16, F04B 41/02, F04B 41/06, A62B 11/00, B01D 53/22

(54) **KOMPRESSORSYSTEM UND VERFAHREN ZUM ABSCHEIDEN VON KOHLENSTOFFDIOXID AUS LUFT**
COMPRESSOR SYSTEM AND METHOD FOR EXTRACTING CARBON DIOXIDE FROM AIR
SYSTÈME DE COMPRESSEUR ET PROCÉDÉ DE SÉPARATION DE DIOXYDE DE CARBONE DE L'AIR

(43) Veröffentlichungstag der Anmeldung: 18.11.2020
(73) Patentinhaber: J.P. Sauer & Sohn Maschinenbau GmbH, 24159 Kiel (DE)
(72) Erfinder: Lemke, Hans-Heinrich, 24119 Kronshagen (DE); Ulrich, Thomas, 25548 Auufer (DE)
(74) Vertreter: Patentanwälte Vollmann Hemmer Lindfeld Partnerschaft mbB

(56) Entgegenhaltungen:
- WO-A1-2004/060538
- DE-A1-102014 108 874
- GB-A- 2 457 929
- US-A1- 2007 272 079

## Beschreibung

Die vorliegende Erfindung betrifft ein Kompressorsystem, welches ausgebildet ist, Druckluft mit einer verringerten Kohlenstoffdioxidkonzentration bereitzustellen Verwandte Systeme sind aus WO 2004/060538 bekannt. Dieses System stellt abgereicherte Druckluft mittels Gebläse und Pumpen in einer Kabine zur Verfügung, jedoch wird ein Spülstrom nicht zurück geführt.

Der Kohlenstoffdioxidgehalt von Luft ist beispielsweise in Industrieanlagen oder auf Schiffen, insbesondere U-Booten und anderen Marineschiffen eine Anforderung des Anlagenbetriebs, z.B. in der Schifffahrt bzw. der Marine für Atemluft. Dabei ist es bekannt, dass Kohlenstoffdioxid (CO2) abgeschieden werden muss, insbesondere wenn die Luft im Kreislauf geführt wird, wozu Filter eingesetzt werden. Dabei ist häufig auch eine Verdichtung der Luft erforderlich, wozu Kompressoren eingesetzt werden.

Es ist Aufgabe der Erfindung, ein optimiertes System und ein optimiertes Verfahren zur Reduzierung des Kohlenstoffdioxidgehaltes in Luft in Kombination mit einer Verdichtung der Luft bereitzustellen.

Diese Aufgabe wird durch ein Kompressorsystem mit den in Anspruch 1 angegebenen Merkmalen sowie durch ein Verfahren zum Abscheiden von Kohlenstoffdioxid aus Luft mit den in Anspruch 13 angegebenen Merkmalen gelöst. Bevorzugte Ausführungsformen der Erfindung ergeben sich aus den Unteransprüchen, der nachfolgenden Beschreibung sowie den beigefügten Figuren.

Das erfindungsgemäße Kompressorsystem dient der Druckerhöhung von zugeführter Luft und gleichzeitig der Verringerung der Kohlendioxidkonzentration. Dazu umfasst das Kompressorsystem einen Kompressor mit zumindest einer Kompressorstufe und bevorzugt zumindest zwei in Serie zueinander angeordneten Kompressorstufen, welche eine stufenweise Druckerhöhung ermöglichen. Bei diesem Kompressor kann es sich insbesondere um einen herkömmlichen Kolbenkompressor handeln, wobei bei einem mehrstufen Kompressor die Kolben mehrerer Kompressorstufen vorzugsweise über eine gemeinsame Kurbelwelle angetrieben werden. Über einen Strömungsweg zwischen jeweils zwei Kompressorstufen wird bei zumindest zwei Kompressorstufen die verdichtete Luft vom Ausgang einer stromaufwärtigen Kompressorstufe dem Eingang einer stromabwärtigen Kompressorstufe zugeführt. Erfindungsgemäß ist vorgesehen, dass ausgangsseitig bzw. stromabwärts der zumindest einen Kompressorstufe oder in einem Strömungsweg zwischen zwei der Kompressorstufen zumindest ein Membranabscheider angeordnet ist. Der Membranabscheider weist einen Permeatausgang auf, welcher mit der Eingangsseite einer stromaufwärts des Membranabscheiders gelegenen stromaufwärtigen Komperssorstufe verbunden ist. Dazu ist der Permeatausgang über eine Rückführleitung mit der Eingangsseite dieser stromaufwärtigen Kompressorstufe verbunden. Ein solcher Membranabscheider ist vorzugsweise derart ausgestaltet, dass der Strömungsweg zwischen den Kompressorstufen an einer ersten Seite, das heißt der Retentat-Seite der Membran entlang verläuft, während die entgegengesetzte Seite der Membran, die Permeatseite, mit der Rückführleitung verbunden ist. Bevorzugt ist der Membranabscheider möglichst an der Ausgangsseite des Kompressors, d.h. stromabwärts der Kompressorstufe angeordnet. Es ist jedoch, wie vorangehend beschrieben auch möglich, den Membranabscheider zwischen zwei Kompressorstufen anzuordnen. Dabei hängt der Ort der Anordnung bevorzugt vor allem vom Druckniveau ab. Wenn der Druck an der Ausgangsseite des Kompressors höher als für den Membranabscheider verträglich ist, ist es bevorzugt den Membranabscheider weiter stromaufwärts, d.h. zwischen zwei Kompressorstufen anzuordnen, so dass der Membranabscheider nur einem geringeren Druckniveau ausgesetzt ist. Dies bedeutet, dass auch bei einem mehrstufigen Kompressor der Membranabscheider entweder stromabwärts der letzten Kompressorstufe oder zwischen zwei Kompressorstufen im Strömungsweg zwischen den Kompressorstufen angeordnet sein kann.

Gemäß der Erfindung wird vorgeschlagen, dass das Kompressorsystem zumindest einen in der Rückführleitung angeordneten Kohlenstoffdioxidabscheider aufweist, welcher dazu ausgebildet ist, die Kohlenstoffdioxidkonzentration in einem durch die Rückführleitung der Eingangsseite der stromaufwärtigen Kompressorstufe zugeführten Spülluftstrom zu verringern. Der Eingangsstufe wird somit über die Rückführleitung durch den Kohlenstoffdioxidabscheider Luft mit einer verringerten Kohlenstoffdioxidkonzentration zugeführt. Der Kohlenstoffdioxidabscheider hält dabei zumindest einen Teil des Kohlenstoffdioxides zurück oder führt diesen in geeigneter Weise aus dem Spülluftstrom ab, so dass sich in dem Spülluftstrom die Kohlenstoffdioxidkonzentration verringert.

Der Spülluftstrom bzw. die Luft, die über den Membranabscheider am Permeatausgang in die Rückführleitung abgeschieden wird, wird der Eingangsstufe wieder zugeführt und weist somit nach Passieren des Kohlenstoffdioxidabscheiders, einen im Vergleich zur vom Membranabscheider abgeschiedenen Spülluft niedrigeren Kohlenstoffdioxidgehalt auf. Ein wesentlicher Vorteil der Erfindung ist, dass nicht der gesamte von dem Kompressor geförderte Volumenstrom durch den Kohlenstoffdioxidabscheider geleitet wird. Damit kann ein kleinerer, leichterer und kostengünstiger Kohlenstoffdioxidabscheider verwendet werden, als er bei Anordnung an einer Ein- oder Ausgangsseite des Kompressors erforderlich wäre. Außerdem ist der Spülluftstrom durch den Membranabscheider bevorzugt bereits sauber und somit ist bevorzugt keine weitere Filterung des Spülluftstroms durch weitere Filter notwendig, bevor dieser dem Kohlenstoffdioxidabscheider in der Spülluftleitung (Purge-Line) des Membranabscheiders zugeführt wird. Damit wird zudem die Standzeit des Kohlenstoffdioxidabscheiders verbessert.

Vorteilhaft weist der Membranabscheider zumindest eine Membran auf, welche derart ausgebildet ist, dass sie zumindest für Kohlenstoffdioxid und vorzugsweise zumindest für Kohlenstoffdioxid und für Wasser durchlässiger ist als für Stickstoff, um zumindest einen Teil dieser Bestandteile aus dem Luftstrom zwischen den Kompressorstufen abscheiden und der Spülluft zuführen zu können. D.h. die abzuscheidenden Bestandteile wie Kohlenstoffdioxid und vorzugsweise Wasser passieren die Membran schneller. Das schnellere Passieren der Membran eines Luftbestandteils bedeutet, dass dieser Luftbestandteil zu größeren Anteilen durch die Membran hindurch zum Permeatausgang strömt als diejenigen die Membran langsamer passierenden Luftbestandteile. Das schnellere Passieren von Kohlenstoffdioxid als Stickstoff führt dazu, dass insbesondere pro Volumenstrom mehr Kohlenstoffdioxid als Stickstoff in den Spülluftstrom abgeschieden wird und dem Kohlenstoffdioxidabscheider somit ein Luftstrom mit erhöhter Konzentration von Kohlenstoffdioxid zugeführt wird. Dies ermöglicht ein effizienteres Abscheiden des Kohlenstoffdioxids aus dem Luftstrom, indem das Kohlenstoffdioxid zunächst in einen Teilstrom (d.h. den Spülluftstrom) konzentriert wird. Insbesondere ist der Membranabscheider dazu eingerichtet, Stickstoff am langsamsten bzw. schlechtesten passieren zu lassen, damit die Konzentration bzw. der Anteil von Stickstoff in der Spülluft gering ist. Das schnellere Passieren der Membran von Wasser kann beispielsweise dazu genutzt werden, um Wasser aus dem Kompressorsystem zu entfernen. Dabei bildet der Membranabscheider einen Membrantrockner.

In einer bevorzugten Ausführungsform ist zusätzlich zu dem Membranabscheider, vorzugsweise stromabwärts des Membranabscheiders in dem Strömungsweg zwischen den zwei Kompressorstufen ein Spülventil angeordnet, über welches ein Gasstrom in die Rückführleitung abzweigbar ist, um dem Kohlenstoffdioxidabscheider Luft mit einem definierten Druck und Volumenstrom zuführen und/oder den Kohlenstoffdioxidabscheider mit dem Gasstrom spülen zu können.

Bevorzugt beträgt ein Spülluftstrom in der Rückführleitung weniger als 20 % und vorzugsweise weniger als 15 % des von dem Kompressor angesaugten Volumenstromes. Dies ermöglicht eine optimierte Baugröße des Kohlenstoffdioxidabscheiders. Insbesondere kann der Volumenstrom der Spülluft dazu 10 % bis 15 % des Volumenstroms der von dem Kompressor angesaugten Eingangsluft sein.

In einer vorteilhaften Ausführungsform ist der Membranabscheider derart ausgebildet ist, dass der Membranabscheider mehr als 40 % und vorzugsweise mehr als 50 % des Kohlenstoffdioxids, welches in dem Luftstrom enthalten ist, welcher in den Membranabscheider eintritt, in den Spülluftstrom, d.h. über den Permeatausgang in die Rückführleitung abscheidet. Beispielsweise werden bei einem Anteil von 350 ppmv Kohlenstoffdioxid in dem Luftstrom, welcher in den Membranabscheider eintritt, über den Membranabscheider ca. 180 ppmv Kohlenstoffdioxid in den Spülluftstrom abgeschieden. Wird dem Kohlenstoffdioxidabscheider die Spülluft mit einem relativ hohen Kohlenstoffdioxidgehalt zugeführt, kann der Kohlenstoffdioxidabscheider besonders effektiv das Kohlenstoffdioxid aus der Spülluft abscheiden. Damit wird die Effektivität und der Bauraumbedarf des Kohlenstoffdioxidabscheider weiter verbessert.

Vorzugsweise ist der Kohlenstoffdioxidabscheider als ein Filter und insbesondere als ein Atemkalk aufweisendes Filter ausgebildet. Solche Filter haben sich als geeignet erwiesen, Kohlenstoffdioxid zu binden und so aus der Luft abzuscheiden. Kalkfilter mit Atemkalk funktionieren mit einer bestimmten Luftfeuchtigkeit. In dieser Ausführungsform ist es von Vorteil, wenn der Spülluftstrom durch das vorherige Abscheiden durch den Membranabscheider feucht bzw. wasserhaltig ist, wie es oben beschrieben wurde. Bevorzugt dient der Membranabscheider, wie oben ausgeführt, auch als Membrantrockner, so dass sowohl Kohlendioxid als auch Wasser aus dem Hauptluftstrom zwischen den Kompressorstufen in den Spülluftstrom abgeschieden werden. Der Einsatz einer optionalen Luftbefeuchtung insbesondere am Eintritt des Kohlenstoffdioxidabscheiders zur Befeuchtung des Atemluftkalks ist somit vorzugsweise entbehrlich. Der Atemkalk im Kohlenstoffdioxidabscheider darf feucht sein.

Bevorzugt ist ausgangsseitig der stromaufwärtigen Kompressorstufe und stromaufwärts des Membranabscheiders ein Wasserabscheider, bevorzugt ein mechanischer Wasserabscheider, angeordnet. Dadurch, dass der Wasserabscheider stromaufwärts des Membranabscheiders angeordnet ist, kann sichergestellt werden, dass den Membranabscheider nur Wasserdampf erreicht und keine Wassertropfen zu dem Membrantrockner gelangen. Ggf. kann die Luft hierzu zusätzlich auch noch einmal vorgewärmt werden, bevor sie den Membranabscheider erreicht. Bevorzugt ist der Wasserabscheider ausgangsseitig derjenigen stromaufwärtigen Kompressorstufe angeordnet, deren Eingangsseite der Spülluftstrom über die Rückführleitung zugeführt wird. Ein Wasserabscheider könnte in einem mehrstufigen Kompressor jedoch auch erst weiter stromabwärts, beispielsweise hinter einer zweiten Kompressorstufe angeordnet sein. Bevorzugt ist, dass der Wasserabscheider stromaufwärts des Membrantrockners angeordnet ist. Je nach Feuchtigkeit der Luft, kann auch jeweils ein Wasserabscheider hinter mehreren Kompressorstufen angeordnet sein. Der oder die Wasserabscheider sind in bekannter Weise, beispielsweise als Zentrifugalabscheider ausgebildet, um Wasser aus dem Luftstrom abzuscheiden. Durch die Anordnung des Wasserabscheiders stromabwärts der Einmündung der Rückführleitung kann an dieser Stelle auch das Wasser, welches über den Membranabscheider abgeschieden wurde und der Eingangsstufe zurückgeführt wurde, aus dem Kompressorsystem effektiv entfernt werden.

Vorteilhaft weist der Kompressor mindestens drei und vorzugsweise vier Kompressorstufen auf, wobei der Membranabscheider bevorzugt zwischen zwei Kompressorstufen, besonders bevorzugt in einem Strömungsweg zwischen einer vorletzten und einer letzten Kompressorstufe angeordnet ist. Diese Anordnung hat den Vorteil, dass der Membranabscheider möglichst nah zur Ausgangsseite des Kompressors angeordnet werden kann, dennoch aber in einem Bereich des mehrstufigen Kompressors angeordnet ist, in welchem der Druck den maximal zulässigen Betriebsdruck des Membranabscheiders nicht übersteigt..

Vorzugsweise bildet die erste Kompressorstufe die genannte stromaufwärtige Kompressorstufe, d.h., die Eingangsstufe des Kompressorsystems, mit deren Eingangsseite die Rückführleitung verbunden ist. So kann die Spülluft nach dem Abscheiden bzw. Filtern von Kohlendioxid auf einem niedrigen Druckniveau der Eingangsseite des Kompressors wieder zugeführt werden. Durch die Rückführung der Spülluft in die Eingangsseite des Kompressors wird insgesamt erreicht, dass die Zusammensetzung der Luft im Wesentlichen nicht verändert wird und der Gesamtluftstrom im Wesentlichen keinen Sauerstoffanteil verliert. Dies ist vor allem für Atemluftanwendungen vorteilhaft. So weist der Ausgangsluftstrom, welcher aus der letzten Kompressorstufe austritt, einen im Wesentlichen unveränderten Sauerstoffanteil und einen verringerten Anteil von Kohlenstoffdioxid auf.

Bevorzugt ist der Kompressor vierstufig ausgebildet ist, und der Membranabscheider ist in einem Strömungsweg zwischen der dritten und der vierten Kompressorstufe, d.h. der Ausgangsstufe des Kompressorsystems, angeordnet. Dies ermöglicht in optimierter Weise eine Verdichtung der Luft, ein Abscheiden von Kohlenstoffdioxid und eine Beaufschlagung des Membranabscheiders mit einem für ein effektives Abscheiden benötigten Druck.

Vorteilhaft ist ein Eingangsdruck des Membranabscheiders kleiner als 100 bar und vorzugsweise kleiner als 90 bar. Weiter bevorzugt ist der Eingangsdruck kleiner als 80 bar. Der Eingangsdruck des Membranabscheiders sollte zweckmäßigerweise ausreichend hoch sein, um einen effektiven Gasübertritt durch die Membran hindurch zu ermöglichen, darf jedoch nicht zu hoch sein, um die Membran nicht zu beschädigen. Der Eingangsdruck des Membranabscheiders wird durch den Ausgangsdruck der stromaufwärts des Membranabscheiders angeordneten Kompressorstufe bestimmt. Beispielsweise gleicht bei einem vorteilhaften vierstufigen Kompressor der Ausgangsdruck der dritten Kompressorstufe dem Eingangsdruck des Membranabscheiders.

In einer bevorzugten Ausführungsform ist ein Druck in der Rückführleitung eingangsseitig des Kohlenstoffdioxidabscheider kleiner als 5 bar, vorzugsweise kleiner als 1,5 bar. Ein solcher am Kohlenstoffdioxidabscheider vorliegender und im Vergleich zu dem Ausgangsdruck der stromaufwärtigen Kompressorstufe kleine Druck bewirkt. dass geringere Anforderungen an die Druckfestigkeit des Gehäuses des Kohlenstoffdioxidabscheiders gestellt werden. Vorzugsweise ist der Eingangsdruck am Kohlenstoffdioxidabscheider kleiner als 1,3 bar.

Neben dem beschriebenen Kompressorsystem betrifft die Erfindung ein Verfahren zum Abscheiden von Kohlestoffdioxid aus der Luft, welches insbesondere in Kombination mit dem vorangehend beschriebenen Kompressorsystem zur Anwendung gelangen kann. Dabei ist zu verstehen, dass vorangehend beschriebene Merkmale des Kompressorsystems ebenfalls bevorzugte Merkmale des Verfahrens sein können und darüber hinaus das vorangehend beschriebene Kompressorystem vorzugsweise derart ausgestaltet ist, dass es die nachfolgend beschriebenen Verfahrensmerkmale zur Anwendung bringen kann. Das erfindungsgemäße Verfahren zum Abscheiden von Kohlenstoffdioxid aus Luft umfasst folgende Schritte:
- Verdichten eines Luftstroms in zumindest einer ersten Kompressorstufe;
- Abscheiden eines Spülluftstroms mit erhöhter Konzentration von Kohlenstoffdioxid aus dem Luftstrom an einem Abzweigpunkt stromabwärts der ersten Kompressorstufe;
- Abscheiden von Kohlenstoffdioxid aus dem Spülluftstrom und Rückführen des Spülluftstroms in die Eingangsseite der ersten Kompressorstufe; und vorzugsweise
- Verdichten des Luftstromes stromabwärts des Abzweigpunktes in zumindest einer zweiten Kompressorstufe.
Wie oben mit Bezug zu dem Kompressorsystem beschrieben, hat das Abscheiden eines Spülluftstroms mit erhöhter Konzentration von Kohlendioxid aus dem Luftstrom den Vorteil, dass das eigentliche Abscheiden bzw. Abtrennen von Kohlenstoffdioxid in einem Luftstrom erfolgt, in welchem das Kohlenstoffdioxid bereits konzentriert ist. Somit muss ein geringerer Volumenstrom durch einen entsprechenden Kohlenstoffdioxidabscheider geleitet werden. Das Abscheiden des Spülluftstroms erfolgt somit in der Weise, dass aus dem Luftstrom ein größerer Teil an Kohlendioxid als an anderen Luftbestandteilen in den Spülluftstrom abgeschieden wird. Im verbleibenden Luftstrom wird somit die Konzentration von Kohlenstoffdioxid verringert. Somit wird bevorzugt am Abzweigpunkt zunächst in einem Teilluftstrom bzw. dem Spülluftstrom ein großer Anteil des Kohlenstoffdioxids aus dem Luftstrom abgeführt und konzentriert, um dann nachfolgend aus dem Spülluftstrom gefiltert bzw. abgeschieden zu werden, wobei der verbleibende Rest des Spülluftstroms dem Hauptluftstrom wieder zugeführt wird, so dass die übrigen Luftanteile, und insbesondere der Sauerstoffanteil nicht verringert wird. Der Abzweigpunkt kann insbesondere durch den Membranabscheider gebildet sein. Stromabwärts des Abzweigpunktes kann gemäß einer bevorzugten Ausführungsform der Luftstrom in zumindest einer zweiten Kompressorstufe verdichtet werden. Dies ist jedoch nicht zwingend erforderlich.

Eine bevorzugte Ausführungsform der Erfindung wird anhand der beigefügten Figuren beschrieben. Dabei zeigen:
- Fig. 1: eine schematische Darstellung eines erfindungsgemäßen Kompressorsystems; und
- Fig. 2: eine schematische Darstellung eines erfindungsgemäßen Kompressorsystems in einer zweiten Ausführungsform.

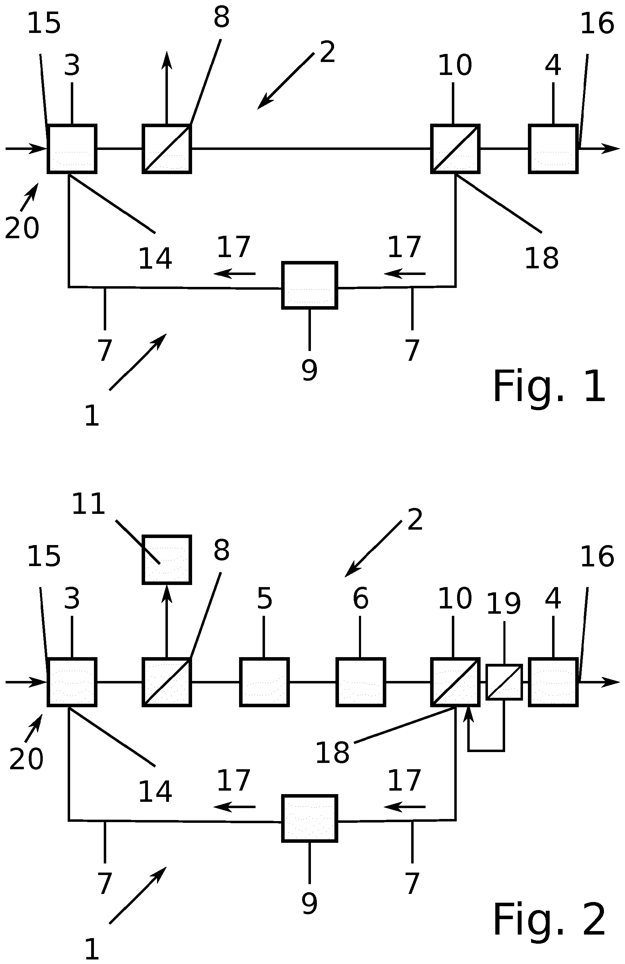

Figur 1 zeigt ein erfindungsgemäßes Kompressorsystem 1, welches ausgebildet ist, Druckluft mit einer verringerten Kohlenstoffdioxidkonzentration bereitzustellen gemäß einer ersten Ausführungsform der Erfindung. Das Kompressorsystem 1 umfasst einen mehrstufigen Kompressor 2 zur mehrstufigen Verdichtung von Luft. Der mehrstufige Kompressor 2 umfasst eine Eingangsstufe 3 und eine Ausgangsstufe 4. Somit ergibt sich in dem Kompressor 2 eine zweistufige Komprimierung der Luft, die entlang eines Strömungsweges von der Eingangsstufe 3 zur Ausgangsstufe 4 strömt. Der Kompressor kann als Kolbenkompressor ausgebildet sein, wobei die Kolben der Eingangsstufe 3 und der Ausgangsstufe 4 über eine gemeinsame Kurbelwelle angetrieben werden.

Die Eingangsstufe 3 weist einen Lufteingang 15 auf. Durch den Lufteingang 15 gelangt aufzubereitende Luft, z.B. Umgebungsluft oder aufzubereitende Atemluft in die Eingangsstufe 3, d.h. das Kompressorsystem 1 saugt über die Eingangsstufe 3 Luft an. Die Eingangsstufe 3 komprimiert die am Lufteingang 15 eingetretene Luft, die anschließend zu der Ausgangsstufe 4 weitergeleitet wird.

Die Ausgangsstufe 4 weist einen Luftausgang 16 auf. Aus dem Luftausgang 16 tritt die vom Kompressorsystem 1 verdichtete Luft mit verringerter Kohlenstoffdioxidkonzentration in sich anschließende Anlagenteile und/oder Speicher aus. Das Kompressorsystem 1 weist somit eine Strömungsrichtung auf, mit der Luft vom Lufteingang 15 der Eingangsstufe 3 entlang des Strömungsweges zum Luftausgang 16 der Ausgangsstufe 4 gefördert, verdichtet und dort ausgegeben wird.

Das Kompressorsystem 1 weist einen Membranabscheider 10 zum Abscheiden von insbesondere wasserhaltiger Spülluft als Spülluftstrom 17 auf. Durch den Membranabscheider wird ein Teilluftstrom in Form eines Spülluftstroms von dem Hauptluftstrom durch den Kompressor abgetrennt. Dieser Spülluftstrom wird nach dem Austritt aus der Eingangsstufe 3 in eine Rückführleitung 7 abgezweigt. Dabei tritt der Spülluftstrom 17 durch die Membran oder Membranen des Membranabscheiders hindurch, während der Hauptluftstrom als Retentant durch den Membranabscheider weiter zu der Ausgangsstufe 4 strömt.

Der Membranabscheider 10 weist einen Permeatausgang 18 auf, aus welchem der Spülluftstrom 17 in die Rückführleitung 7 tritt. Der Membranabscheider 10 ist damit stromabwärts der Eingangsstufe 3 und stromaufwärts der Ausgangsstufe 4 angeordnet. Der Membranabscheider 10 gibt einen Teil der dem Membranabscheider 10 zugeführten Luft an die Ausgangsstufe 4 aus und scheidet einen Teil wasserhaltige Luft als Spülluftstrom 17 in die Rückführleitung 7 ab. Verschiedene in der dem Membranabscheider 10 zugeführten Luft befindliche Luftbestandteile durchdringen den Membranabscheider 10 und insbesondere eine Membran des Membranabscheiders 10 unterschiedlich schnell bzw. leicht. Das heißt die Membran oder die Membranen des Membranabscheiders sind für verschiedene Luftbestandteile unterschiedlich durchlässig. Hieraus resultiert das Abscheiden. Hier kann die Membran für Wasserdampf, Sauerstoff und Kohlenstoffdioxid durchlässiger sein als für Stickstoff. So ist Stickstoff (N2) ein langsames Gas, während Wasserdampf (H2O), Sauerstoff (O2) und Kohlenstoffdioxid (CO2) schnelle Gase sind. Die Membran leichter bzw. schneller passierende Luftbestandteile werden in den Spülluftstrom 17 abgeschieden, während langsamere Luftbestandteile den Membranabscheider 10 in Richtung der vom Membranabscheider 10 im Strömungsweg stromabwärts liegenden Kompressorstufe 4 bzw. Ausgangsstufe 4 passieren, d.h. nicht durch die Membran hindurchtreten. Damit werden die verschiedenen Bestandteile der dem Membranabscheider 10 zugeführten Luft voneinander separiert. Insbesondere Stickstoff wird an die Ausgangsstufe 4 weitergeleitet und vor allem Wasserdampf und Kohlenstoffdioxid werden in die Rückführleitung 7 abgeschieden.

Die Rückführleitung 7 zum Rückführen der vom Membranabscheider 10 abgeschiedenen wasserhaltigen Spülluft zur Eingangsstufe 3 verbindet den Permeatausgang 18 des Membranabscheiders 10 mit einer Eingangsseite 20 der stromaufwärtigen Kompressorstufe 3 bzw. der Eingangsstufe 3, mit deren Lufteingang 15. Die Rückführung der Spülluft im Spülluftstrom 17 ist notwendig, um die Zusammensetzung der Luft nicht zu verändern. Es werden neben Kohlenstoffdioxid auch andere Gase, wie zum Beispiel Sauerstoff aus der Druckluft über den Membranabscheider 10 teilweise abgeschieden. Durch die Rückführung der Spülluft bleibt die Zusammensetzung der Luft unverändert. Das Kompressorsystem 1 kann aufbereitete Atemluft direkt aus der dem Lufteingang 15 zugeführten Raumluft erzeugen. Insbesondere ist eine Anbindung an eine Schutzluft nicht notwendig. Damit wird der über den Membranabscheider 10 gewonnene bzw. abgeschiedene Sauerstoff in der die Rückführungleitung 7 bildenden Permeatleitung bzw. in der Spülluftleitung genutzt. Insbesondere auf U-Booten kann über die Rückführung der von dem Membranabscheider abgeschiedene Sauerstoff für die Bootsatmosphäre wieder genutzt werden. Stromabwärts der ersten Kompressorstufe 3 und stromaufwärts des Membranabscheiders 10 ist in dem Strömungsweg ein Wasserabscheider 8, beispielsweise ein mechanischer Wasserabscheider, angeordnet, durch welchen Wasser aus dem Luftstrom abgeschieden wird. So wird sichergestellt, dass den Membranabscheider 10 nur Wasserdampf und keine Wassertropfen erreichen. Das in Form von Wasserdampf im Membranabscheider 10 abgeschiedene Wasser wird über die Rückführleitung 7 der Eingangsseite wieder zugeführt, so dass auch dieser Wasseranteil dann später über den Wasserabscheider 8 abgeschieden werden kann.

Das Kompressorsystem 1 umfasst ferner einen Kohlenstoffdioxidabscheider 9 zum Abscheiden von Kohlenstoffdioxid aus dem Spülluftstrom 17. Der Kohlendioxidabscheider ist als Kohlenstoffdioxidfilter zum Zurückhalten und Binden von Kohlenstoffdioxid ausgebildet. Der Kohlenstoffdioxidabscheider 9 ist in der Rückführleitung 7 angeordnet und dazu eingerichtet, die Kohlenstoffdioxidkonzentration in einem durch die Rückführleitung 7 der Eingangsseite 20 der stromaufwärtigen Kompressorstufe 3 zugeführten Spülluftstrom 17 zu verringern. Der dem Kohlenstoffdioxidabscheider 9 zugeführte Luftstrom ist somit der am Permeatausgang 18 ausgegebene Spülluftstrom 17.

Der Kohlenstoffdioxidabscheider 9 ist in der Rückführleitung 7 zum Abscheiden des Kohlenstoffdioxids aus dem Spülluftstrom 17 vorgesehen. Der Kohlenstoffdioxidabscheider 9 ist direkt in der Rückführleitung 7 stromabwärts des Membranabscheiders 10 angeordnet, d. h. ohne weitere Luftfilter oder Ähnliches zur Filterung der Spülluft. Der Spülluftstrom 17 ist zur Kohlenstoffdioxidfilterung durch den Kohlenstoffdioxidabscheider 9 bereits durch das Abscheiden von dem Membranabscheider 10 hinreichend sauber und weist einen vorteilhaft niedrigen Druck von bspw. 1,3 bar zum effektiven Abscheiden durch den Kohlenstoffdioxidabscheider 9 auf. Der Druck des Spülluftstroms 17 kann insbesondere durch den stromaufwärts angeordneten Membranabscheider 10 niedriger sein als der Druck am Ausgang der Eingangsstufe 3.

Insbesondere kann der Kohlenstoffdioxidabscheider 9 ein Kalkfilter sein. Ein solches Kalkfilter nutzt Atemkalk, um Kohlendioxid zu binden und somit aus dem Luftstrom abzuscheiden. Dadurch wird der Kohlenstoffdioxidanteil in der Luft verringert, das heißt die Kohlenstoffdioxidkonzentration nimmt ab. Die Filterung des Kohlenstoffdioxids aus dem Spülluftstrom mit Hilfe des Kohlenstoffdioxidabscheiders 9 wird erfindungsgemäß dadurch besonders effektiv, dass der Spülluftstrom das Kohlenstoffdioxid bereits konzentriert enthält, so dass insgesamt ein verringerter Luftstrom durch den Kohlenstoffdioxidabscheider 9 geleitet wird. Der Membranabscheider 10 und der Kohlenstoffdioxidabscheider 9 bilden somit zwei komplementär wirkende Filter. Während der Membranabscheider 10 für Kohlenstoffdioxid besonders durchlässig ist und Stickstoff zurückhält, ist der im Spülluftstrom stromabwärts angeordnete Kohlenstoffdioxidabscheider 9 ein Filter, welches das Kohlenstoffdioxid zurückhält bzw. abscheidet. Dadurch wird in einem ersten Schritt erreicht, dass das Kohlenstoffdioxid in einem Teilluftstrom, nämlich dem Spülluftstrom konzentriert und dann aus diesem Teilluftstrom in einem zweiten Schritt über den Kohlenstoffdioxidabscheider 9 abgeschieden wird. Der aus dem Kohlenstoffdioxidabscheider 9 austretende Rest-Spülluftstrom, welcher von Kohlenstoffdioxid befreit worden ist, wird der Eingangsseite der Eingangsstufe 3 wieder zugeführt, so dass die verbleibenden Anteile der Luft im Gesamtluftstrom bleiben, insbesondere der Sauerstoffanteil nicht verringert wird. Der Kohlenstoffdioxidabscheider 9 ist in dieser Ausführungsform besonders effektiv, wenn die dem Kohlenstoffdioxidabscheider 9 zugeführte Luft feucht ist, d. h. eine hohe relative Luftfeuchtigkeit aufweist.

Die Kohlenstoffdioxidkonzentration der den Kohlenstoffdioxidabscheider 9 passierten Luft ist durch das Abscheiden und Binden des Kohlenstoffdioxids geringer als diejenige der am Permeatausgang 18 ausgegeben Spülluft. Bei der Erzeugung von Atemluft muss der Kohlenstoffdioxidgehalt häufig verringert werden. An Bord von insbesondere Marineschiffen kann es zur Anreicherung von Kohlenstoffdioxid in der Luft kommen. Somit ist es notwendig, bei der Erzeugung von Atemluft überschüssiges Kohlenstoffdioxid abzuscheiden, was mit dem erfindungsgemäßen Kompressorsystem sehr effektiv möglich ist.

Der Spülluftstrom 17 enthält einen Sauerstoffanteil von ca. 50 %, da auch Sauerstoff über den Membranabscheider 10 abgeschieden wird. Bei dem beschriebenen Kompressorsystem 1, wird daher die Spülluft 17 in die Eingangsstufe 3 zurückgeführt.

Die Rückführleitung 7 führt die Luft, deren Kohlenstoffdioxidgehalt durch den Kohlenstoffdioxidabscheider 9 verringert ist, in den Lufteingang 15, um die Luft gemeinsam mit angesaugter Luft der Eingangsstufe 3 zuzuführen.

Über den Membranabscheider 10 werden etwa 10 % der dem Membranabscheider 10 zugeführten Luft als Spülluft abgeschieden. Hinzu kann Spülluft von einem Spülventil 19 kommen (siehe Figur 2). Dem Kohlenstoffdioxidabscheider 9 wird insgesamt ein Volumenstrom von vorteilhaft höchstens 15 %, beispielsweise 10 % des Gesamtluftstroms durch den Kompressor 2 bzw. des in den Membranspeicher 10 eintretenden Eingangsstroms zugeführt.

Figur 2 zeigt ein erfindungsgemäßes Kompressorsystem 1 in einer zweiten bevorzugten Ausführungsform. Diese Ausführungsform wird in Hinblick auf die Unterschiede zu der in Figur 1 gezeigten Ausführungsform erläutert.

Das in Figur 2 gezeigte Kompressorsystem 1 weist einen Kompressor 2 umfassend vier Kompressorstufen 3,4,5,6 auf. Zwischen der Eingangsstufe 3 und der Ausgangsstufe 4 sind eine zweite Kompressorstufe 5 und eine dritte Kompressorstufe 6 vorgesehen. In der Eingangsstufe 3, der zweiten Kompressorstufe 5, der dritten Kompressorstufe 6 und der Ausgangsstufe 4 wird in die Eingangsstufe 3 eintretende Luft sukzessiv verdichtet und/oder strömt entlang eines Strömungsweges von der Eingangsstufe 3 durch den Kompressor 2 bis zu der Ausgangsstufe 4.

Stromabwärts der Eingangsstufe 3 ist ein insbesondere mechanischer Wasserabscheider 8 zum Abscheiden von Wasser aus der von der Eingangsstufe 3 abgegebenen Luft vorgesehen. Beispielsweise kann der Wasserabscheider 8 das Wasser durch Fliehkräfte abscheiden und nach außen abführen, beispielsweise in ein Reservoir 11. Der Wasserabscheider 8 kann auch in der mit Bezug zu Figur 1 beschriebenen Ausführungsform insbesondere stromabwärts der Eingangsstufe 3 vorgesehen sein. Zusätzlich könnten auch nach den weiteren Kompressorstufen 5 und 6 jeweils ein Wasserabscheider 8, wie er vorangehend beschrieben wurde, installiert sein. Wenn die angesaugte Luft relativ trocken ist, könnte der Wasserabscheider 8 hinter der ersten Kompressorstufe 3 entfallen und es könnte alternativ ein Wasserabscheider erst hinter der zweiten Kompressorstufe 5 angeordnet werden. Durch den oder die Wasserabscheider 8 soll sichergestellt sein, dass kein freies Wasser zu dem Membrantrockner 10 gelangt. Ggf. kann stromaufwärts des Membrantrockners 10 auch noch eine hier nicht gezeigte Heizung installiert sein.

Vorteilhaft ist der Membranabscheider 10 wie in Figur 2 gezeigt zwischen der dritten Kompressorstufe 6 und der Ausgangsstufe 4, d.h. der vierten Kompressorstufe 6 vorgesehen. Zwischen der dritten Kompressorstufe 6 und der Ausgangsstufe 4 liegt ein Druck von etwa 80 bar vor, mit dem der Membranabscheider 10 beaufschlagt wird.

Stromabwärts des Membranabscheiders 10 und stromaufwärts der Ausgangsstufe 4 ist in dem Strömungsweg ferner ein Spülventil 19 angeordnet, über welches ein Gasstrom zum Spülen des Membranabscheiders 10 abzweigbar ist. Ein solches Spülventil 19 könnte auch bei der Ausführungsform gemäß Figur 1 zum Einsatz kommen. Ferner könnte auch bei der zweiten Ausführungsform, wie in der Ausführungsform gemäß Figur 1, auf ein solches Spülventil 19 verzichtet werden. Das Spülventil 19 kann beispielsweise dazu genutzt werden, einen Gasstrom zum Spülen des Membranabscheiders abzuzweigen.

Ferner sind Ausführungsformen denkbar, in denen der Kompressor 2 drei oder mehr als vier Kompressorstufen umfasst. Der Membranabscheider 10 kann in anderen Ausführungsformen hinter einer Kompressorstufe 3,4,5,6 angeordnet werden, die den Membranabscheider 10 mit einem derartigen Druck beaufschlagt, mit dem der Membranabscheider 10 besonders effektiv die dem Membranabscheider 10 zugeführte Luft in einen Hauptluftstrom und einen Spülluftstrom trennen kann.

### Bezugszeichenliste

- 1: Kompressorsystem
- 2: Kompressor
- 3: Kompressorstufe bze. Eingangsstufe
- 4: Komperssorstufe bzw. Ausgangsstufe
- 5: zweite Kompressorstufe
- 6: dritte Kompressorstufe
- 7: Rückführleitung
- 8: Wasserabscheider
- 9: Kohlenstoffdioxidabscheider
- 10: Membranabscheider
- 11: Reservoir
- 15: Lufteingang
- 16: Luftausgang
- 17: Spülluftstrom
- 18: Permeatausgang
- 19: Spülventil
- 20: Eingangsseite

## Patentansprüche

1. Kompressorsystem (1), welches ausgebildet ist, Druckluft mit einer verringerten Kohlenstoffdioxidkonzentration bereitzustellen, mit einem Kompressor (2), welcher zumindest eine Kompressorstufe (3, 4, 5, 6) aufweist, zumindest einem ausgangsseitig der zumindest einen Kompressorstufe (3, 5, 6) angeordneten Membranabscheider (10), einer Rückführleitung (7), welche einen Permeatausgang (18) des Membranabscheiders (10) mit der Eingangsseite (20) einer stromaufwärts des Membranabscheiders (10) gelegenen stromaufwärtigen Kompressorstufe (3, 5, 6) verbindet, sowie zumindest einem in der Rückführleitung (7) angeordneten Kohlenstoffdioxidabscheider (9), welcher dazu ausgebildet ist, die Kohlenstoffdioxidkonzentration in einem durch die Rückführleitung (7) der Eingangsseite (20) der stromaufwärtigen Kompressorstufen (3, 4, 5, 6) zugeführten Spülluftstrom (17) zu verringern.

2. Kompressorsystem nach Einspruch 1, welches zumindest zwei Kompressorstufen (3, 4, 5, 6) aufweist, wobei der zumindest eine Membranabscheider in einem Strömungsweg zwischen zwei Kompressorstufen (3, 4, 5, 6) angeordnet ist.

3. Kompressorsystem (1) nach Anspruch 1 oder 2, bei welchem der Membranabscheider (10) zumindest eine Membran aufweist, welche derart ausgebildet ist, dass sie zumindest für Kohlenstoffdioxid und vorzugsweise zumindest für Kohlenstoffdioxid und Wasser durchlässiger ist als für Stickstoff.

4. Kompressorsystem (1) nach einem der vorangehenden Ansprüche, bei welchem zusätzlich zu dem Membranabscheider (10), vorzugsweise stromabwärts des Membranabscheiders (10) in dem Strömungsweg zwischen den zwei Kompressorstufen (3,4,5,6) ein Spülventil (19) angeordnet ist, über welches ein Gasstrom zum Spülen des Membranabscheiders (10) abzweigbar ist.

5. Kompressorsystem (1) nach einem der vorangehenden Ansprüche, welches derart ausgebildet ist, dass ein Spülluftstrom (17) in der Rückführleitung (7) weniger als 20 % und vorzugsweise weniger als 15 % des von dem Kompressor (2) angesaugten Volumenstromes beträgt.

6. Kompressorsystem (1) nach einem der vorangehenden Ansprüche, bei welchem der Membranabscheider (10) derart ausgebildet ist, dass der Membranabscheider (10) mehr als 40 % und vorzugsweise mehr als 50 % des Kohlenstoffdioxids, welches in dem Luftstrom enthalten ist, welcher in den Membranabscheider (10) eintritt, über den Permeatausgang (18) in einen Spülluftstrom (17) in die Rückführleitung (7) abscheidet.

7. Kompressorsystem (1) nach einem der vorangehenden Ansprüche, bei welchem der Kohlenstoffdioxidabscheider (9) als ein Filter und insbesondere als ein Atemkalk aufweisendes Filter ausgebildet ist.

8. Kompressorsystem (1) nach einem der vorangehenden Ansprüche, bei welchem ausgangsseitig der stromaufwärtigen Kompressorstufe (3,5,6) stromaufwärts des Membranabscheiders (10) ein Wasserabscheider (8), bevorzugt ein mechanischer Wasserabscheider, angeordnet ist.

9. Kompressorsystem (1) nach einem der vorangehenden Ansprüche, bei welchem der Kompressor (2) mindestens drei und vorzugsweise vier Kompressorstufen (3,4,5,6) aufweist, wobei bevorzugt der Membranabscheider (10) in einem Strömungsweg zwischen einer vorletzten und einer letzten Kompressorstufe (3,4,5,6) angeordnet ist.

10. Kompressorsystem (1) nach einem der vorangehenden Ansprüche, bei welchem die erste Kompressorstufe (3) die stromaufwärtige Kompressorstufe (3,4,5,6) bildet, mit deren Eingangsseite (20) die Rückführleitung (7) verbunden ist.

11. Kompressorsystem (1) nach einem der vorangehenden Ansprüche, bei welchem der Kompressor (2) vierstufig ausgebildet ist, und der Membranabscheider (10) in einem Strömungsweg zwischen der dritten und der vierten Kompressorstufe (6,4) angeordnet ist.

12. Kompressorsystem (1) nach einem der vorangehenden Ansprüche, bei welchem ein Eingangsdruck des Membranabscheiders (10) kleiner als 100 bar und vorzugsweise kleiner als 90 bar ist.

13. Kompressorsystem (1) nach einem der vorangehenden Ansprüche, bei welchem ein Druck in der Rückführleitung (7) eingangsseitig des Kohlenstoffdioxidabscheider (9) kleiner als 5 bar, vorzugsweise kleiner als 1,5 bar ist.

14. Verfahren zum Abscheiden von Kohlenstoffdioxid aus Luft mit folgenden Schritten:
- Verdichten eines Luftstroms in zumindest einer ersten Kompressorstufe (3);
- Abscheiden eines Spülluftstromes (17) mit erhöhter Konzentration von Kohlenstoffdioxid aus dem Luftstrom an einem Abzweigpunkt stromabwärts der ersten Kompressorstufe (3) ;
- Abscheiden von Kohlenstoffdioxid aus dem Spülluftstrom (17) und Rückführen des Spülluftstroms (17) in die Eingangsseite (20) der ersten Kompressorstufe (3).

15. Verfahren nach Anspruch 14, bei welchem der Luftstrom stromabwärts des Abzweigpunktes in zumindest einer zweiten Kompressorstufe verdichtet wird.

## Claims

1. A compressor system (1) which is designed to provide compressed air with a reduced carbon dioxide concentration, with a compressor (2) which comprises at least one compressor stage (3, 4, 5, 6,) at least one membrane separator (10) which is arranged at the outlet side of the at least one compressor stage (3, 5, 6), a return conduit (7) which connects a permeate outlet (18) of the membrane separator (10) to the inlet side (20) of a compressor stage (3, 4, 5) which is situated upstream of the membrane separator (10), as well as at least one carbon dioxide separator (9) which is arranged in the return conduit (7) and which is designed to reduce the carbon dioxide concentration in a rinsing airflow (17) which is fed through the return conduit (7) to the inlet side (20) of the upstream compressor stages (3, 4, 5, 6).

2. A compressor system according to claim 1, which comprises at least two compressor stages (3, 4, 5, 6), wherein the at least one membrane separator is arranged in a flow path between two compressor stages (3, 4, 5, 6).

3. A compressor system (1) according to claim 1 or 2, concerning which the membrane separator (10) comprises at least one membrane which is designed in a manner such that it is more permeable at least to carbon dioxide and preferably at least to carbon dioxide and water, than to nitrogen.

4. A compressor system (1) according to one of the preceding claims, concerning which additionally to the membrane separator (10), a rinsing valve (19), via which the gas flow can be branched off for rinsing the membrane separator (10) is arranged preferably upstream of the membrane separator (10) in the flow path between the two compressor stages (3, 4, 5, 6).

5. A compressor system (1) according to one of the preceding claims, which is designed in a manner such that a rinsing airflow (17) in the return conduit (7) is less than 20% and preferably less than 15% of the volume flow which is sucked by the compressor (2).

6. A compressor system (1) according to one of the preceding claims, concerning which the membrane separator (10) is designed in a manner such that the membrane separator (10) separates more than 40% and preferably more than 50% of the carbon dioxide which is contained in the airflow which enters the membrane separator (10), via the permeate outlet (8) into a rinsing airflow (17) into the return conduit (7).

7. A compressor system (1) according to one of the preceding claims, concerning which the carbon dioxide separator (9) is designed as a filter and in particular is designed as a filter comprising soda lime.

8. A compressor system (1) according to one of the preceding claims, concerning which a water separator (8), preferably a mechanical water separator is arranged upstream of the membrane separator (190) at the outlet side of the upstream compressor stage (3, 5, 6).

9. A compressor system (1) according to one of the preceding claims, concerning which the compressor (2) comprises at least three and preferably four compressor stages (3, 4, 5, 6,), wherein preferably the membrane separator (10) is arranged in a flow path between a last to one and a last compressor stage (3, 4, 5, 6).

10. A compressor system (1) according to one of the preceding claims, concerning which the first compressor stage (3) forms the upstream compressor stage (3,4,5,6), to whose inlet side (20) the return conduit (7) is connected.

11. A compressor system (1) according to one of the preceding claims, concerning which the compressor (2) is designed in a four-stage manner, and the membrane separator (10) is arranged in a flow path between the third and the fourth compressor stage (6, 4).

12. A compressor system (1) according to one of the preceding claims, concerning which the inlet pressure of the membrane separator (10) is smaller than 100 bar and preferably smaller than 90 bar.

13. A compressor system (1) according to one of the preceding claims, concerning which a pressure in the return conduit (7) at the inlet side of the carbon dioxide separator (9) is smaller than 5 bar, preferably smaller than 1.5 bar.

14. A method for separating carbon dioxide from air with the following steps:
- compressing an airflow in at least one compressor stage (3);
- separating a rinsing airflow (17) with an increased concentration of carbon dioxide out of the airflow at a branching point downstream of the first compressor stage (3);
- separating carbon dioxide out of the rising airflow (17) and leading the rinsing airflow (17) back into the inlet side (20) of the first compressor stage (3).

15. A method according to claim 14, concerning which the airflow downstream of the branching point is compressed in at least one second compressor stage.

## Revendications

1. Système de compresseur (1) qui est conçu pour fournir de l'air comprimé présentant une concentration réduite en dioxyde de carbone, comprenant un compresseur (2) qui présente au moins un étage de compresseur (3, 4, 5, 6), au moins un séparateur à membrane (10) agencé côté sortie de l'étage de compresseur (3, 5, 6), au moins au nombre de un, une conduite de retour (7) qui relie une sortie de perméat (18) du séparateur à membrane (10) au côté entrée (20) d'un étage de compresseur amont (3, 5, 6) situé en amont du séparateur à membrane (10), et au moins un séparateur de dioxyde de carbone (9) agencé dans la conduite de retour (7) et qui est conçu pour réduire la concentration en dioxyde de carbone dans un écoulement d'air de balayage (17) amené par la conduite de retour (7) au côté entrée (20) des étages de compresseur amont (3, 4, 5, 6).

2. Système de compresseur selon la revendication 1, qui présente au moins deux étages de compresseur (3, 4, 5, 6), dans lequel le séparateur à membrane, au moins au nombre de un, est agencé dans un trajet d'écoulement entre deux étages de compresseur (3, 4, 5, 6).

3. Système de compresseur (1) selon la revendication 1 ou 2, dans lequel le séparateur à membrane (10) présente au moins une membrane qui est conçue de manière à être plus perméable au moins au dioxyde de carbone, et de préférence au moins au dioxyde de carbone et à l'eau, qu'à l'azote.

4. Système de compresseur (1) selon l'une des revendications précédentes, dans lequel, en plus du séparateur à membrane (10), de préférence en aval du séparateur à membrane (10), est agencée, dans le trajet d'écoulement entre les deux étages de compresseur (3, 4, 5, 6), une vanne de rinçage (19) par l'intermédiaire de laquelle un écoulement de gaz peut être dérivé pour rincer le séparateur à membrane (10).

5. Système de compresseur (1) selon l'une des revendications précédentes, qui est conçu de telle sorte qu'un écoulement d'air de rinçage (17) dans la conduite de retour (7) est inférieur à 20 %, et de préférence inférieur à 15 %, de l'écoulement volumique aspiré par le compresseur (2).

6. Système de compresseur (1) selon l'une des revendications précédentes, dans lequel le séparateur à membrane (10) est conçu de telle manière que le séparateur à membrane (10) sépare plus de 40 %, et de préférence plus de 50 %, du dioxyde de carbone qui est contenu dans l'écoulement d'air qui pénètre dans le séparateur à membrane (10), par la sortie de perméat (18), en un flux d'air de rinçage (17) dans la conduite de retour (7).

7. Système de compresseur (1) selon l'une des revendications précédentes, dans lequel le séparateur de dioxyde de carbone (9) est conçu sous la forme d'un filtre, et en particulier sous la forme d'un filtre à chaux sodée.

8. Système de compresseur (1) selon l'une des revendications précédentes, dans lequel un séparateur d'eau (8), de préférence un séparateur d'eau mécanique, est agencé en amont du séparateur à membrane (10), côté sortie de l'étage de compresseur amont (3, 5, 6).

9. Système de compresseur (1) selon l'une des revendications précédentes, dans lequel le compresseur (2) présente au moins trois et de préférence quatre étages de compresseur (3, 4, 5, 6), dans lequel le séparateur à membrane (10) est de préférence agencé dans un trajet d'écoulement entre un avant-dernier et un dernier étage de compresseur (3, 4, 5, 6).

10. Système de compresseur (1) selon l'une quelconque des revendications précédentes, dans lequel le premier étage de compresseur (3) forme l'étage de compresseur amont (3, 4, 5, 6) auquel est reliée côté entrée (20) la conduite de retour (7).

11. Système de compresseur (1) selon l'une des revendications précédentes, dans lequel le compresseur (2) est conçu en quatre étages, et le séparateur à membrane (10) est agencé dans un trajet d'écoulement entre les troisième et quatrième étages de compresseur (6, 4).

12. Système de compresseur (1) selon l'une des revendications précédentes, dans lequel une pression d'entrée du séparateur à membrane (10) est inférieure à 100 bars, et de préférence inférieure à 90 bars.

13. Système de compresseur (1) selon l'une des revendications précédentes, dans lequel une pression dans la conduite de retour (7) côté entrée du séparateur de dioxyde de carbone (9) est inférieure à 5 bars, et de préférence inférieure à 1,5 bar.

14. Procédé de séparation de dioxyde de carbone de l'air, comprenant les étapes consistant à :
- comprimer un écoulement d'air dans au moins un premier étage de compresseur (3) ;
- séparer un écoulement d'air de rinçage (17) ayant une concentration accrue en dioxyde de carbone de l'écoulement d'air au niveau d'un point de dérivation en aval du premier étage de compresseur (3) ;
- séparer le dioxyde de carbone de l'écoulement d'air de rinçage (17) et renvoyer l'écoulement d'air de rinçage (17) vers le côté entrée (20) du premier étage de compresseur (3).

15. Procédé selon la revendication 14, dans lequel l'écoulement d'air est comprimé en aval du point de dérivation dans au moins un deuxième étage de compresseur.
